Europäisches Patentamt

(19) European Patent Office

Office européen des brevets

(11) Veröffentlichungsnummer: **0 351 745**

**A2**

(12) **EUROPÄISCHE PATENTANMELDUNG**

(21) Anmeldenummer: 89113037.9

(51) Int. Cl.⁴: **F16H 15/12**

(22) Anmeldetag: 15.07.89

(30) Priorität: 19.07.88 DE 3824399

(43) Veröffentlichungstag der Anmeldung:
24.01.90 Patentblatt 90/04

(84) Benannte Vertragsstaaten:
BE DE ES FR GB IT NL SE

(71) Anmelder: **FORD-WERKE AKTIENGESELLSCHAFT**
Werk Köln-Niehl Henry-Ford-Strasse
Postfach 60 40 02
D-5000 Köln 60(DE)
(84) BE DE IT NL SE

Anmelder: **FORD MOTOR COMPANY LIMITED**
Eagle Way
Brentwood Essex CM13 3BW(GB)
(84) GB

Anmelder: **FORD FRANCE SOCIETE ANONYME**
344 Avenue Napoléon Bonaparte B.P. 307
F-92506 Rueil Malmaison Cedex(FR)
(84) FR

Anmelder: **FORD MOTOR COMPANY DEARBORN**
One Parklane Boulevard
Dearborn, MI 48126(US)
(84) ES

(72) Erfinder: **Svab, Eugen**
Masurenstrasse 17
D-5000 Köln 71(DE)

(74) Vertreter: **Ritzkowsky, Harald, Dipl.-Ing. et al**
Ford-Werke Aktiengesellschaft
Patentabteilung NH/DRP Henry-Ford-Strasse
D-5000 Köln 60(DE)

(54) **Regelbares Ringreibgetriebe.**

(57) Bei einem Ringreibgetriebe mit einer Antriebswelle, die mit einer Antriebsscheibe verbunden ist und mit einer Abtriebsscheibe, die mit einer Abtriebswelle verbunden ist, und wobei die Antriebswelle und die Abtriebswelle koaxial zueinander angeordnet sind und mit einem zwischen der Antriebsscheibe und der Abtriebsscheibe über eine Verschiebeeinrichtung radial verschiebbaren, ringförmigen Reibelement, das an einer anlagestelle an der Antriebsscheibe und an einer gegenüberliegenden Anlagestelle an der Abtriebsscheibe reibschlüssig anliegt, ist das Reibelement als ein Kugellager (15) ausgebildet, das im Zwischenraum zwischen der Antriebsscheibe (2) und der Abtriebsscheibe (4) derart schräg angeordnet ist, daß sein Außenlaufring (16) an der einen Anlagestelle (P1) an der Antriebsscheibe (2) und an der anderen Anlagestelle (P2) an der Abtriebsscheibe (4) anliegt, und daß die Verschiebeeinrichtung (23, 26) am Innenlaufring (18) des Kugellagers (15) angreift.

FIG.1

## Regelbares Ringreibgetriebe

Die Erfindung betrifft ein regelbares Ringreibgetriebe nach dem Oberbegriff des Patentanspruches 1.

Aus der DE-PS 21 26 122 geht ein Ringreibgetriebe hervor, das im wesentlichen eine mit einer Antriebswelle verbundene Außenkegelscheibe und eine mit einer Abtriebswelle verbundene Außenkegelscheibe aufweist, wobei die Achsen der voneinander beabstandeten Außenkegelscheiben gegeneinander versetzt sind. Die Kraftübertragung zwischen den Außenkegelscheiben erfolgt über ein Kugellager, das zwischen den Außenkegelscheiben derart angeordnet ist, daß sein als Reibelement mit zwei Innenkegelfasen ausgebildeter Innenring die Verbindung zwischen den Außenkegelscheiben herstellt. Dabei liegen die eine Seite des Innenringes an der einen Außenkegelscheibe und die andere Seite des Innenringes an der anderen Außenkegelscheibe derart an, daß bei einer Verschiebung des Kugellagers in radialer Richtung entlang der die Innenkegelfasen des Innenringes des Kugellagers verbindenden Linie der eine Ablaufdurchmesser auf der einen Außenkegelscheibe zum Zentrum und der andere Ablaufdurchmesser auf der anderen Außenkegelscheibe um das gleiche Maß vom Zentrum wegbewegt wird.

Ein Problem eines derartigen Ringreibgetriebes besteht darin, daß es einen Versatz zwischen der Antriebs- und Abtriebswelle aufweist und seine Einzelteile durch die Außenkegelscheiben und das spezielle Kugellager relativ kompliziert und dadurch teuer in der Herstellung sind.

Aus der Fig. 3 der DE-PS 812 618 geht ein Ringreibgetriebe hervor, bei dem die Antriebswelle mit einer ebenen Antriebsscheibe und die Abtriebswelle mit einer ebenen Abtriebsscheibe koaxial zueinander angeordnet sind, wobei zwischen der Antriebsscheibe und der Abtriebsscheibe zur Kraftübertragung ein radial verschiebbares Reibelement vorgesehen ist, das aus zwei Reibringen besteht, von denen jeder eine konische Reibfläche und eine an der der Reibfläche abgewandten Seite mittig angeformte Hohlwelle aufweist. In den Hohlwellen, die von einer Hülse umgeben sind, ist eine Schraubenfeder derart angeordnet, daß die Reibringe auseinander und gegen die ebenen Flächen der Antriebs- und Abtriebsscheiben gedrückt werden.

Ein Problem einer derartigen Anordnung besteht darin, daß sie aufgrund der Gestaltung des Reibelementes in Axialrichtung eine relativ große Abmessung aufweist. Zudem ist das Reibelement kompliziert aufgebaut und daher nicht kostengünstig herstellbar.

Die Aufgabe der vorliegenden Erfindung besteht darin, ein regelbares Ringreibgetriebe der zuletzt beschriebenen Art dahingehend zu verbessern, daß es wesentlich kompakter aufgebaut und einfacher herstellbar ist.

Diese Aufgabe wird durch ein im Oberbegriff des Patentanspruches 1 erläutertes regelbares Ringreibgetriebe gelöst, das die im kennzeichnenden Teil des Patentansprues 1 angegebenen Merkmale aufweist.

Der wesentliche Vorteil besteht darin, daß das erfindungsgemäße Ringreibgetriebe sowohl in der radialen als auch in der axialen Richtung sehr kompakt ist, weil einerseits die Achsen der Antriebswelle und der Abtriebswelle nicht gegeneinander versetzt sind und weil anderer seits der axiale Abstand zwischen der Antriebsscheibe und der Abtriebsscheibe durch die Gestaltung des Reibelementes als Kugellager sehr klein gehalten werden kann.

Ein weiterer Vorteil des erfindungsgemäßen Ringreibgetriebes besteht darin, daß es durch die ebenen An- und Abtriebsscheiben und durch die Gestaltung des Reibelementes als ein einfaches, Standard-Kugellager, das durch eine einfach aufgebaute Verstelleinrichtung radial verschiebbar ist, sehr kostengünstig herstellbar ist.

Besonders vorteilhaft ist die Anwendung des vorliegenden Ringreibgetriebes beispielsweise als regelbares Vorschaltgetriebe einer Zahnrad- oder Sichelpumpe, durch die in einem automatischen Getriebe ein Druckmittel bereitgestellt wird. Dabei wird gefordert, daß die bei kleinen Drehzahlen, beispielsweise Leerlauf, gelieferte Druckmittelmenge verhältnismäßig groß (z.B. 30 l/min) ist, während die bei hohen Drehzahlen gelieferte Menge vergleichsweise klein (z.B. 15 l/min) sein kann. Ohne die Anordnung eines regelbaren Vorschaltgetriebes müßte die Pumpe so stark ausgelegt werden, daß sie bei den kleinen Drehzahlen die geforderte große Menge liefern kann.

Durch Vorschalten des erfindungsgemäßen Ringreibgetriebes kann aber vorteilhafterweise erreicht werden, daß die Pumpe für die hohe Drehzahl ausgelegt werden kann, bei der die Fördermenge kleiner ist und die bei der kleineren Drehzahl erforderliche höhere Fördermenge dadurch erreicht werden kann, daß das Ringreibgetriebe so geregelt wird, daß es abtriebsseitig die Pumpe mit einer höheren Drehzahl antreibt.

Vorteilhafte Ausgestaltungen der Erfindung gehen aus den Unteransprüchen hervor.

Die Erfindung wird anhand von Ausführungsformen in den Figuren näher erläutert. Es zeigt:

Fig. 1 einen Schnitt durch ein mechanisch verstellbares Ringreibgetriebe;

Fig. 2 einen Schnitt durch ein hydraulisch verstellbares Ringreibgetriebe und

· Fig. 3 einen Schnitt des Getriebes in Fig. 2 entlang der Linie III-III.

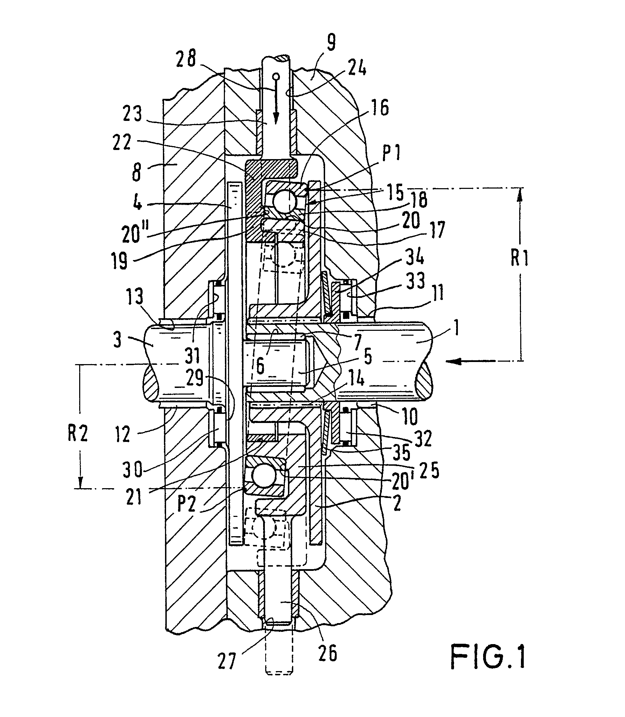

In der aus Fig. 1 ersichtlichen Ausführungsform weist das stufenlos regelbare Ringreibgetriebe eine mit einer Antriebswelle 1 verbundene Antriebsscheibe 2 und eine mit einer Abtriebswelle 3 verbundene Antriebsscheibe 4 auf. Dabei sind die Antriebswelle 1 und die Abtriebswelle 3 koaxial derart zueinander angeordnet, daß die ebenen Reibflächen der Antriebs- und der Abtriebsscheibe 2, 4 voneinander beabstandet sind. Vorzugsweise greift ein über die Abtriebsscheibe 4 mittig vorstehender Zapfen 5 in eine Bohrung 6 ein, die sich in der Antriebswelle 1 befindet. Zwischen der Außenfläche des Zapfens 5 und der Innenfläche der Bohrung 6 ist ein Lager 7 vorgesehen, das vorzugsweise die Form eines Nadellagers oder einer Lagerschale aufweist.

Das Gehäuse des vorliegenden Ringreibgetriebes besteht aus einem becherförmigen Gehäuseteil 9, an dem ein plattenförmiges Gehäuseteil 8 befestigt ist. Die Antriebsscheibe 2 und die von dieser beanstandete Abtriebsscheibe 4 sind in dem von dem plattenförmigen Gehäuseteil 8 und dem becherförmigen Gehäuseteil 9 umschlossenen Raum angeordnet. Das becherförmige Gehäuseteil 9 kann ein Teil eines Getriebe- oder Motorgehäuses sein und das platten förmige Gehäuseteil ist ein Bestandteil der Druckmittelpumpe

Die Antriebswelle 1 ist über ein Lager 10, einem Nadellager oder eine Lagerschale in einer Bohrung 11 des becherförmigen Gehäuseteiles 9 gelagert. In der entsprechenden Weise ist die Abtriebswelle 3 über ein Lager 12, einem Nadellager oder eine Lagerschale in einer Bohrung 13 des plattenförmigen Gehäuseteiles 8 gelagert.

Die Antriebswelle 1 ist über eine Kerbverzahnung 14, die sich auf dem Außenumfang des sich in die Antriebsscheibe 2 erstreckenden Endes der Antriebswelle 1 befindet, drehfest mit der Antriebsscheibe 2 verbunden.

In dem Zwischenraum zwischen der Antriebsscheibe 2 und der Abtriebsscheibe 4 ist ein Standard-Kugellager 15, derart schräg angeordnet, daß die eine Seite seines Aussenlaufringes 16 an der Antriebsscheibe 2 in einem Anlagepunkt P1 und die andere Seite des Außenlaufringes 16 an der Abtriebsscheibe 4 in einem weiteren Anlagepunkt P2 derart anliegen, daß bei der radialen Verschiebung des Kugellagers 15 sich der eine Anlagepunkt P1, um denselben Betrag an die Achse der Antriebswelle 1 und der Abtriebswelle 3 annähert (entfernt), um den sich der andere Anlagepunkt P2 des Außenlaufringes 16 von der genannten Achse entfernt (annähert).

Im folgenden wird die Verstelleinrichtung für das Kugellager 15 näher erläutert. Diese besteht aus einem ersten Haltering 17, der mit seiner Außenfläche 20 den Innenumfang des Innenlaufringes 18 des Kugellagers 15 aufnimmt und vorzugsweise einem zweiten Haltering 19. Die Außenfläche 20 des Halteringes 17 ist entsprechend der schrägen Anordnung des Kugellagers 15 geneigt. Der Haltering 17 weist an seinem Innenumfang eine ringförmige Vertiefung 21 auf, in die der Haltering 19 eingreift. Entsprechend der Schräglage des Kugellagers 15 ist der Haltering 17 in axialer Richtung so bemessen, daß seine Außenfläche 20 den gesamten Innenumfang des Innenlaufringes 18 abstützt.

An der dem Anlagepunkt P1 des Außenlaufringes 16 an der Antriebsscheibe 2 axial gegenüberliegenden Seite des Kugellagers 15 ist mit dem Haltering 18 ein radial nach außen durch den Spalt zwischem dem Kugellager 15 und der Abtriebsscheibe 4 verlaufender Steg 22 befestigt, der mit einer Betätigungsstange 23 verbunden ist, die durch eine Bohrung 24 in dem Gehäuseteil 9 radial nach außen verläuft. In der entsprechenden Weise ist der Haltering 17 an der dem Anlagepunkt P2 axial gegenüberliegenden Seite des Kugellagers 15 über einen radial durch den Spalt zwischen dem Kugellager 15 und der Antriebsscheibe 2 verlaufenden Steg 25 mit einer Führungsstange 26 verbunden, die in einer radialen Bohrung 27 des Gehäuseteiles 9 geführt wird. Die Bohrungen 24 und 27 und daher auch die Betätigungsstange 23 und die Führungsstange 26 sind senkrecht zur gemeinsamen Achse der Antriebswelle 1 und der Abtriebswelle 3 zueinander ausgerichtet. Durch Verschieben der Betätigungsstange 23 in der Richtung des Pfeiles 28 kann das Kugellager 15 in der bereits geschilderten Weise zur Verstellung des Übersetzungsverhältnisses radial verschoben werden. In der Fig. 1 sind durch die durchgezogenen Linien und die gestrichelten Linien beide maximal möglichen Positionen dargestellt, wobei sich die jeweiligen Übersetzungsverhältnisse durch die Radien R1 und R2 bestimmen.

An die Außenfläche 20 des Halteringes 17 angrenzend, weist der Steg 25 eine axiale Anlagefläche 20′ für den Innenlaufring 18 des Kugellagers 15 auf, die sich senk recht zur Außenfläche 20 erstreckt. Eine entsprechende axiale Anlagefläche 20″ ist auch am Steg 22 des Halteringes 19 vorgesehen.

Die Abtriebsscheibe 4 weist an ihrer dem plattenförmigen Gehäuseteil 8 zugewandten Seite eine Lauffläche 29 für ein Lager 30 auf, das sich an einer der Lauffläche 29 gegenüberliegenden Lauffläche 31 des Gehäuseteiles 8 abstützt und das vorzugsweise als Nadellager ausgebildet ist. In der entsprechenden Weise stützt sich ein Lager 32, ebenfalls ein Nadellager, einerseits an einer Lagerfläche 33 des die Antriebswelle 1 umgebenden Bereiches des becherförmigen Gehäuseteiles 9 und andererseits an einem die Antriebswelle 1 umgebenden Ring 34 ab, der durch eine Tellerfeder 35 vorgespannt wird.

Die Tellerfeder 35 stützt sich mit ihrem Innenumfang an einem ringförmigen Flansch am Ring 34 und mit ihrem Aussenumfang an der dem becherförmigen Gehäuseteil 9 zugewandten Seite der Antriebsscheibe 2 ab. Durch die Tellerfeder 35 wird der für die Kraftübertragung erforderliche Anlagedruck des Kugellagers an den Anlagepunkten P1 und P2 aufgebracht.

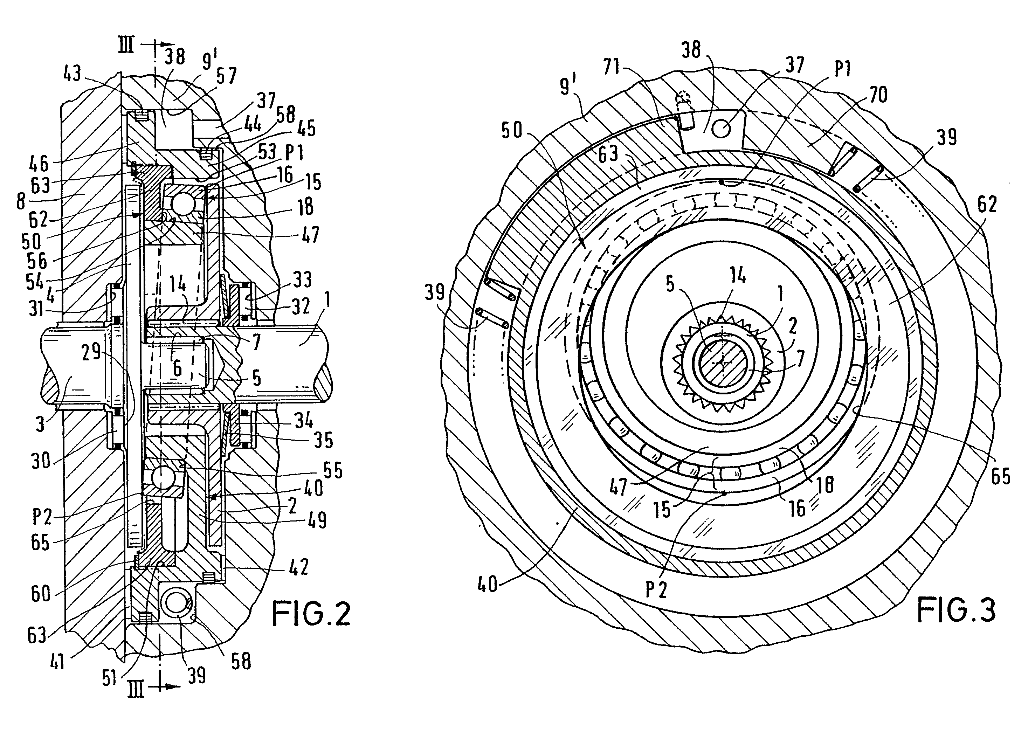

Im folgenden wird im Zusammenhang mit den Fig. 2 und 3 eine weitere Ausführungsform beschrieben, bei der an der Stelle der mechanisch betätigbaren Verstelleinrichtung der Ausführungsform der Fig. 1 eine hydraulisch betätigbare Verstelleinrichtung vorgesehen ist. Da von den Verstellelementen abgesehen, beide Ausführungsformen ähnlich aufgebaut sind, sind in den Fig. 1 und 2, 3 gleiche Elemente durch dieselben Bezugszeichen bezeichnet.

Die hydraulisch betätigbare Verstellvorrichtung weist eine erste ringförmige Scheibe 40 auf, die koaxial zu den Achsen der An- und Abtriebswellen 1 und 3 drehbar ist und einen in den Raum zwischen der Antriebsscheibe 2 und der Abtriebsscheibe 4 befindlichen Bereich aufweist, der das Kugellager 15 exzentrisch hält. Genauer gesagt, sitzt das Kugellager 15 auf einen exzentrisch zu den Achsen der An-und Abtriebswellen 1 und 3 angeordneten Innenring 47 der Scheibe 40, der eine schräge Außenringfläche 54 aufweist, die entsprechend der Neigung des Kugellagers 15 unter einem Winkel zur Achse der An- und Abtriebswelle 1 und 3 verläuft. Die Scheibe 40 weist eine Aussparung 53 auf, durch die das schräg gehaltene Kugellager 15 hindurchtreten kann, um einen Kontakt zur Antriebsscheibe 2 herzustellen.

An der der Aussparung 53 radial gegenüberliegenden Seite weist die Scheibe 40 einen Stegbereich 49 auf, über den der Innenring 47 mit dem äußeren Bereich der Scheibe 40 verbunden ist. Der Stegbereich 49 greift an der der Aussparung 53 gegenüberliegenden Seite durch den Spalt zwischen der Antriebsscheibe 2 und dem Kugellager 15 hindurch. In seinem an die schräge Außenfläche 54 des Innenringes 47 angrenzenden Bereich weist der radial verlaufende Stegbereich 49 eine sich senkrecht zur Außenringfläche 54 erstreckende axiale Anschlagfläche 55 für den Innenring 18 des Kugellagers 15 auf. Der Stegbereich 49 verbindet den exzentrischen Innenring 47 mit dem konzentrisch zur Achse der An- und Abtriebswelle 1 und 3 im Gehäuse gelagerten äußeren Bereich der Scheibe 40. Dieser äußere Bereich besteht vorzugsweise im wesentlichen aus einem konzentrisch zu den Achsen der An- und Abtriebswelle 1 und 3 angeordneten Außenring 45, der an seiner der Abtriebsscheibe 4 zugewandten Seite einen radial über den Außenring 45 nach außen vorstehenden Flanschbereich 46 aufweist. Mit dem plattenförmigen Gehäuseteil 8 ist ein Gehäuseteil 9′ verbunden, das so ausgestaltet ist, daß es eine erste zylindrische Innenfläche 57 aufweist, die an der äußeren Endfläche des Flanschbereiches 46 dicht anliegt und eine weitere zylindrische Innenfläche 58 radial nach innen versetzt ist, so daß der Endbereich des Außenringes 45 mit seiner Außenfläche an der zylindrischen Innenfläche 58 dicht anliegt. Um das dichte Anliegen an den zylindrischen Innenflächen 57 und 58 zu erreichen, sind in entsprechenden Nuten der zylindrischen Außenflächen des Flanschbereiches 46 und des Außenringes 45 O-Ringdichtungen 43 bzw. 44 vorgesehen.

Die Stufe zwischen den zylindrischen Innenflächen 57 und 58 des Gehäuseteiles 9′ ist so beschaffen, daß ein kreisringförmiger Kanal 38 von etwa quadratischem Querschnitt zwischen der zylindrischen Innenfläche 57, dem gegenüberliegenden Bereich der zylindrischen Außenfläche des Aussenringes 45, der zwischen den zylindrischen Innenflächen 57 und 58 radial verlaufenden Stufenfläche des Gehäuseteiles 9′ und der gegenüberliegenden ebenfalls radial verlaufenden Fläche zwischen den zylindrischen Außenflächen des Flanschbereiches 46 und des Außenringes 45 besteht.

In den Kanal 38 mündet eine Bohrung 37, durch die ein Druckmittel, z.B. Öl, in den Kanal 38 eingeführt werden kann. In den Kanal 38 ragt auf der einen Seite der Bohrung 37 ein Gehäusebereich 70 des Gehäuseteiles 9′ hinein, der einen Querschnitt und eine Länge in der Umfangsrichtung besitzt, die so bemessen sind, daß er eine Sperre für das Druckmittel darstellt. Auf der anderen Seite ragt in den Kanal 38 ein Vorsprung 71 der Scheibe 40 hinein, dessen Querschnitt und dessen Länge in der Umfangsrichtung ebenfalls so bemessen sind, daß er eine Sperre für das Druckmittel bildet. Im Kanal 38 befindet sich außerdem eine Ringfeder 39, deren eines Ende sich am Gehäuse 9′ bzw. dem Bereich 70 an die der Bohrung 37 abgewandten Seite und deren anderes Ende sich an der Scheibe 40 bzw. dem Vorsprung 71 an der der Bohrung 37 abgewandten Seite abstützt, so daß die Scheibe 40 durch die Kraft der Feder 39 gegen einen Anschlag in eine Endposition gedreht wird, in der beispielsweise das auf dem Innenring 47 gehaltene Kugellager 15 die in der Fig. 2 dargestellte Position annimmt, in der der Anlagepunkt P1 zwischen dem Außenlaufring 16 des Kugellagers 15 und der Antriebsscheibe 2 sich radial gesehen in der äußersten Position befindet.

Wenn nun ein Druckmittel durch die Bohrung 37 in den Kanal 38 eingeführt wird, wird die Scheibe 40 gegen die Kraft der Ringfeder 39 gedreht.

Bei dieser Drehung wird das Kugellager 15 aufgrund seiner exzentrischen Lagerung so verdreht, daß der Anlagepunkt P1 zwischen seinem Aussenlaufring 16 und der Antriebsscheibe 2 auf einer spiralförmigen Bahn aus der zuvor genannten Außenposition nach innen und gleichzeitig der Anlagepunkt P2 zwischen dem Außenlaufring 16 des Kugellagers 15 und der Abtriebsscheibe 4 auf einer spiralförmig verlaufenden Bahn nach außen bewegt wird. Dabei entspricht der radiale Abstand, um den der Analgepunkt P1 an der Antriebsscheibe 2 nach innen bewegt wird genau dem radialen Abstand, um den der Anlagepunkt P2 an der Abtriebsscheibe 4 nach außen bewegt wird. Dies bedeutet, daß durch ein gezieltes Einbringen von Druckmittel in den Kanal 38 eine gewünschte Änderung des Übersetzungsverhältnisses des Ringreibgetriebes erreicht werden kann.

Wenn der Druck im Kanal 38 durch Abführen von Druckmittel über die Bohrung 37 derart verringert wird, daß die Kraft der Ringfeder 39 größer wird als die Kraft des Druckmittels im Kanal 38, wird die Scheibe 40 durch die Kraft der Ringfeder 39 wieder in der entgegengesetzten Richtung gedreht, so daß der Anlagepunkt an der Antriebsscheibe 2 sich nach außen und der Anlagepunkt an der Abtriebsscheibe 4 sich nach innen bewegt.

Das Kugellager 15 wird durch eine weitere Scheibe 50 nach seiner Anordnung auf dem Innenring 47 der Scheibe 40 an dieser festgehalten. Diese Scheibe 50 weist einen Bereich 62 auf, der mit einem Außenring 63 verbunden ist. Der Bereich 62 verläuft im Spalt zwischen dem Kugellager 15 und der Abtriebsscheibe 4. Er weist außerdem an seiner der Antriebsscheibe 2 zugewandten Seite vorzugsweise eine senkrecht zur Außenringfläche 54 des Innenringes 47 der Scheibe 40 verlaufende Anlagefläche 56 für den Innenlaufring 18 des Kugellagers 15 auf. An der dem Bereich 62 radial gegenüberliegenden Seite weist die Scheibe 50 eine Aussparung 65 auf, durch die das Kugellager 15 hindurchtritt, so daß sein Außenlaufring 16 in Berührung zur Abtriebsscheibe 4 gelangen kann. Der Außenring 63 der Scheibe 50 sitzt in einem ringförmigen Absatz 51 der Scheibe 40 und wird dort nach der Montage des Kugellagers 15 auf den Innenring 47 der Scheibe 40 gegen axiales Verschieben durch einen Federring 60 oder dgl. festgelegt.

Zwischen den einander zugewandten Flächen des Flanschbereiches 46 und Gehäuseteiles 8 sowie des Gehäuseteiles 9′ und des Außenringes 45 sind vorzugsweise die aus Fig. 2 ersichtlichen Anlaufscheiben 41 und 42 angeordnet, die eine leichte Verdrehung der Scheibe 40 in Bezug auf die Gehäuseteile 8 bzw. 9′ ermöglichen.

Bei beiden beschriebenen Ausführungsformen bringt die Tellerfeder 25 die Kraft auf, mit der der Außenlaufring 16 des Kugellagers 15 gegen die Antriebsscheibe 2 bzw. die Abtriebsscheibe 4 gedrückt wird. Durch eine entspre chende Auslegung der Kraft der Tellerfeder 25 kann dafür gesorgt werden, daß das Ringreibgetriebe nur das festgelegte zu übertragende Drehmoment überträgt und somit bei kurzfristig an der Pumpe auftretenden Störungen (Fressen) eine Überlastungssicherung durch Zulassen einer durch Durchrutschen bewirkten Drehzahldifferenz bereitstellt.

In vorteilhafter Weise kann hierbei die Abtriebswelle 3, z.B. einstückig, mit dem Eingangszahnrad einer Zahnrad-oder Sichelpumpe ausgebildet sein.

Es wird darauf hingewiesen, daß das Kugellager 15 im Raum zwischen der Antriebsscheibe 2 und der Abtriebsscheibe 4 auch in einer Richtung geneigt sein kann, die entgegengesetzt zu der dargestellten Neigung verläuft.

An der Stelle von herkömmlichen Kugellagern, die an den Anlagestellen P1 und P2 punktförmig anliegen, können auch Kugellager Verwendung finden, deren Außenlaufringe zur Vergrößerung der Anlageflächen an den Anlagestellen mit Fasen versehen sind.

## Ansprüche

1. Ringreibgetriebe mit einer Antriebswelle (1), die mit einer antriebsscheibe (2) verbunden ist und mit einer Abtriebsscheibe (4), die mit einer Abtriebswelle (3) verbunden ist, wobei sich die einander zugewandten, ebenen Flächen der Antriebsscheibe (2) und der Abtriebsscheibe (4) in einem Gehäuse (8, 9; 8, 9′) gegenüberliegen und wobei die Antriebswelle (1) und die Abtriebswelle (3) koaxial zueinander angeordnet sind und mit einem zwischen der Antriebsscheibe (2) und der Abtriebsscheibe (4) über eine Verschiebeeinrichtung (23, 26; 40, 46, 50) radial verschiebbaren, ringförmigen Reibelement, das an einer Anlagestelle (P1) an der Antriebsscheibe (2) und an einer gegenüberliegenden Anlagestelle (P2) an der Abtriebsscheibe (4) reibschlüssig anliegt, daß bei einer Verschiebung des Reibelements die eine Anlagestelle (P1) an der Antriebsscheibe (2) zum Zentrum der Antriebsscheibe (2) und die andere Anlagestelle (P2) an der Abtriebsscheibe (4) vom Zentrum der Abtriebsscheibe (4) weg bewegt wird und umgekehrt, **dadurch gekennzeichnet**, daß als Reibelement ein Kugellager (15) vorgesehen ist, das im Zwischenraum zwischen der Antriebsscheibe (2) und der Abtriebsscheibe (4) derart schräg angeordnet ist, daß sein Außenlaufring (16) an der einen Anlagestelle (P1) an der Antriebsscheibe (2) und an der anderen Anlagestelle (P2) an der Abtriebsscheibe (4) anliegt, und daß die Verschiebeeinrichtung (23, 26; 40, 46, 50) am Innenlaufring (18) des Kugellagers (15) angreift.

2. Getriebe nach Anspruch 1, **dadurch gekennzeichnet**, daß die Verschiebeeinrichtung einen den Innenlaufring (18) des Kugellagers (15) über eine schräge Außenringfläche (20) aufnehmenden Haltering (17) aufweist, mit dem ein Steg (25) verbunden ist, der an der der einen Anlagestelle (P1) an der Antriebsscheibe (2) radial gegenüberliegenden Seite des Kugellagers (15) durch den Spalt zwischen dem Kugellager (15) und der Antriebsscheibe (2) hindurchgeführt ist, und daß mit dem Steg (25) an der dem Haltering (17 abgewandten Seite eine im Gehäuse (8, 9) radial verschiebbar gelagerte Stange (26) verbunden ist, bei deren Betätigung die radiale Verschiebung des Kugellagers (15) erfolgt (Fig. 1).

3. Getriebe nach Anspruch 2, **dadurch gekennzeichnet**, daß die Verschiebeeinrichtung einen weiteren Haltering (19) aufweist, der mit dem Haltering (17) verbunden ist und einen weiteren Steg (22) aufweist, der an der Anlagestelle (P2) an der Abtriebsscheibe (4) radial gegenüberliegenden Seite des Kugellagers (15) durch den Spalt zwischen dem Kugellager (15) und der Abtriebsscheibe (4) hindurchgeführt ist, das mit dem weiteren Steg (22) an der dem weiteren Haltering (19) abgewandten Seite eine in dem Gehäuse (8, 9) radial verschiebbare weitere Stange (23) verbunden ist, und daß bei der Betätigung der Stange (26) und/oder der weiteren Stange (23) die radiale Verschiebung des Kugellagers (15) erfolgt.

4. Getriebe nach Anspruch 3 oder 4, dadurch gekennzeichnet, daß der Steg (25) und/oder der weitere Steg (22) eine axiale Anlagefläche (20', 20") für den Innenlaufring (18) des Kugellagers (15) aufweisen.

5. Getriebe nach Anspruch 1, **dadurch ge kennzeichnet**, daß die Verschiebeeinrichtung eine den Innenlaufring des Kugellagers (15) exzentrisch zur Achse der Antriebs- bzw. Abtriebswelle (1, 3) haltende, über eine schräge Außenringfläche (54) aufnehmende ringförmige Scheibe (40) aufweist, die in dem Gehäuse (8, 9') drehbar gelagert ist und die einen Innenring (47) aufweist, der über einen Stegbereich (49) mit einem im Gehäuse (8, 9') drehbaren Außenring (45, 46) der Scheibe (40) verbunden ist, daß der Stegbereich (49) durch einen Spalt zwischen dem Kugellager (15) und der Antriebsscheibe (2) an der der einen Anlagestelle (P1) an der Antriebsscheibe (2) radial gegenüberliegenden Seite des Kugellagers (15) verläuft, und daß an der dem Stegbereich (49) radial gegenüberliegenden Seite eine Aussparung (53) in der Scheibe (40) vorgesehen ist, durch die der Außenlaufring (16) des Kugellagers (15) zur Anlage an der einen Anlagestelle (P1) an der Antriebsscheibe (2) hindurchtritt (Fig. 2).

6. Scheibe nach Anspruch 5, **dadurch ge-** kennzeichnet, daß der Außenring (45, 46) so ausgebildet ist, daß zwischen seiner Außenfläche und dem Gehäuse (8, 9') ein abgedichteter ringförmiger Kanal (38) besteht, in den durch eine Bohrung (37) ein Druckmittel einführbar ist, daß das Gehäuse (8, 9') auf einer Seite der Bohrung (37) einen in den Kanal (38) hineinragenden Gehäusebereich (70) aufweist, dessen Querschnitt so bemessen ist, daß er eine Sperre für das Druckmittel bildet, daß der Außenring (45, 46) auf der anderen Seite der Bohrung (37) einen in den Kanal (38) hineinragenden Vorsprungbereich (71) aufweist, dessen Querschnitt so bemessen ist, daß er eine Sperre für das Druckmittel bildet, und daß eine Ringfeder (39) oder dgl. vorgesehen ist, die sich an dem Gehäusebereich (70) und dem Vorsprungbereich (71) abstützt, um die Scheibe (40) gegen die vom Druckmittel aufgebrachte Kraft zu beaufschlagen.

7. Getriebe nach Anspruch 5, **dadurch gekennzeichnet**, daß eine weitere ringförmige Scheibe (50) vorgesehen ist, die einen Außenring (63), der in einem ringförmigen Absatz (51) des Außenringes (45) der Scheibe (40) gelagert ist aufweist und die Scheibe (50) einen Bereich (62) aufweist, der mit einem Außenring (63) verbunden ist und der an der der Anlagestelle (P2) radial gegenüberliegenden Seite des Kugellagers (15) durch den Spalt zwischen der Antriebsscheibe (2) und dem Kugellager (15) verläuft, und daß die weitere Scheibe (50) an der ihrem Bereich (62) radial gegenüberliegenden Seite eine Aussparung (65) aufweist, durch die der Außenlaufring (16) des Kugellagers (16) zur Anlage an der einen Anlagestelle (P2) an der Abtriebsscheibe (4) hindurchtritt.

8. Getriebe nach einem der Ansprüche 5 bis 7, **dadurch gekennzeichnet**, daß der Stegbereich (49) und der Bereich (62) axiale Anlageflächen (55 bzw. 56) für den Innenring (18) des Kugellagers (15) aufweisen.

9. Getriebe nach einem der Ansprüche 1 bis 8, **dadurch gekennzeichnet**, daß die Antriebs- oder die Abtriebsscheibe (2, 4) in axialer Richtung durch ein Druckmittelservo oder eine Federanordnung (z.B. eine Tellerfeder (35)) derart beaufschlagt sind, daß das Kugellager (15) an der einen Anlagestelle (P1) und an der anderen Anlagestelle (P2) an der Antriebs- bzw. Abtriebsscheibe (2, 4) auch unter Schmiermitteleinfluß reibschlüssig anliegt.

FIG.1

FORD/D-834 E

FIG.3

FIG.2